(19) Europäisches Patentamt
European Patent Office
Office européen des brevets

(11) **EP 4 056 331 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **21162017.4**

(22) Anmeldetag: **11.03.2021**

(51) Internationale Patentklassifikation (IPC):
**B25J 9/16** (2006.01) **G05B 19/4061** (2006.01)

(52) Gemeinsame Patentklassifikation (CPC):
**B25J 9/1674; B25J 9/1676; G05B 19/4061;**
G05B 2219/39176; G05B 2219/40202;
G05B 2219/49138

(54) **SICHERER BETRIEB EINER MEHRACHSKINEMATIK**

SECURE OPERATION OF MULTIPLE-AXLE KINEMATIC

FONCTIONNEMENT SÉCURISÉ D'UNE CINÉMATIQUE À AXES MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.09.2022 Patentblatt 2022/37**

(73) Patentinhaber: **Siemens Aktiengesellschaft**
**80333 München (DE)**

(72) Erfinder:
• **Budday, Dominik**
**91058 Erlangen (DE)**

• **Burmeister, Sören**
**90765 Fürth (DE)**
• **Le, Minh**
**06406 Bernburg (DE)**
• **Stein, Alexander**
**90587 Veitsbronn (DE)**
• **Walter, Maximilian**
**90408 Nürnberg (DE)**

(74) Vertreter: **Siemens Patent Attorneys**
**Postfach 22 16 34**
**80506 München (DE)**

(56) Entgegenhaltungen:
**DE-A1- 102005 011 143    US-A1- 2019 262 993**

EP 4 056 331 B1

**Beschreibung**

Die Erfindung betrifft ein Verfahren sowie eine Steuerung zum sicheren Betreiben einer Mehrachskinematik unter Verwendung einer Sicherheitsfunktion.

In modernen Fertigungsanlagen und Fabriken kommen vermehrt Roboter, Handlingssysteme, Kräne etc. oder generell Mehrachskinematiken verschiedenster Ausführungen zum Einsatz. Für die Sicherheit des Betriebs solcher Mehrachskinematiken in den Anlagen ist es essenziell, dass eine sicherheitsgerichtete Überwachung der Kinematik oder Teile der Kinematik umsetzbar ist. Der sichere Betrieb von Mehrachskinematiken ist dabei für die Vermeidung von Kollisionen mit Objekten in der Umgebung der Mehrachskinematik und insbesondere für die Vermeidung von gefährlichen Unfällen bei Aufenthalt von Menschen in der Umgebung der Mehrachskinematik notwendig.

In Steuerungen von Robotern oder Manipulatoren können dafür Überwachungsfunktionen vorgesehen sein, wie beispielsweise eine Überwachung einer kartesischen Geschwindigkeit eines Punktes. Dabei wird aus sicheren Achspositionen eine kartesische Geschwindigkeit eines Punktes, beispielsweise eines Gelenkes oder des Tools Center Points, berechnet. Anschließend wird geprüft, ob eine Parametrisierung der Geschwindigkeitsgrenze überschritten ist. Ein Überschreiten wird durch einen sicheren Ausgang angezeigt.

Ebenso ist eine sichere Zonenüberwachung bekannt, bei der aus sicheren Achspositionen eine Position und eine Orientierung von beweglichen Kinematikzonen, beispielsweise Quadern oder Kugeln, berechnet wird. Diese werden so parametriert, dass sie die beweglichen Teile der Kinematik vollständig beinhalten, sogenannte Hüllkörper bilden. Anschließend wird für jede Kinematikzone geprüft, ob sie eine zuvor definierte, feststehende Arbeitsraumzone verlässt oder ob sie sich mit zumindest einer zuvor definierten, feststehenden Schutzzone überlappt. Das Verlassen des Arbeitsraumes oder eine Überlappung mit Schutzzonen wird mithilfe von sicheren Ausgängen angezeigt.

Ferner ist die Funktion einer Überwachung einer sicheren Orientierung bekannt. Aus sicheren Achspositionen wird die Orientierung einer zuvor festgelegten Achse, beispielsweise eine Orientierung eines am Tool Center Point befestigten Messers, berechnet. Diese Orientierung wird mit einem Sollwert verglichen und der Unterschied wird an einem sicheren Ausgang ausgegeben.

Ein Endanwender kann die sicheren Ausgänge mit Funktionen verschalten, die eine geeignete Sicherheitsreaktion, beispielsweise den Stopp einer Maschine einleiten oder eine Geschwindigkeitsbegrenzung aktivieren.

Eine sichere Überwachung basiert in der Regel auf sicheren Positionen der einzelnen Achsen als Grundlage für die Ausgabe und gegebenenfalls das Einleiten einer Sicherheitsreaktion. Dabei können die Positionen der einzelnen Achsen nur mit einer bestimmten Genauigkeitsabweichung ermittelt werden. In der Praxis sind Sensorwerte fehlerbehaftet. Solche Fehler müssen durch die Sicherheitsfunktion abgebildet werden. Ungenauigkeiten entstehen auch durch Trägheiten und dadurch verursachte Nachlaufwege.

Bekannte klassische statistische Fehlerrechnung, beispielsweise basierend auf guide of uncertainty in measurements (GUM)-Verfahren, stellen keine zufriedenstellende Berücksichtigung der auftretenden Fehler dar, da hier mittlere Abweichungen berechnet werden, und nicht eine Abweichung im schlechtesten Fall.

Es ist ferner bekannt, lediglich allgemeine Korrekturwerte ohne Kenntnis der spezifischen im Einsatz befindlichen Kinematik mit ihren Daten und der Qualität der eingesetzten Sensoren zu verwenden die Angabe solcher allgemeiner Korrekturwerte muss für einen sicherheitsgerichteten Betrieb sehr konservativ sein, sodass die Verfügbarkeit der Mehrachskinematik im Einsatz oftmals unnötigerweise reduziert ist.

Aus der Offenlegungsschrift US 2019/0262993 A1 ist ein Roboter bekannt mit dynamischer Safety Zone, wobei ein Raum um den Roboter herum überwacht wird. Die dynamischen Zonen können vergrößert werden, wenn der Roboter sich beispielsweise schnell bewegt. Zudem können die Zonen verändert werden je nach Art des Sensors, der im Betrieb verwendet wird.

Vor diesem Hintergrund ist es eine Aufgabe der vorliegenden Erfindung, eine Berücksichtigung von Fehlern, nämlich Fehlerwerten, die Sensorausgabedaten anhaften, oder Nachlaufwegen, bei der sicheren Überwachung von Mehrachskinematiken zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren gemäß Anspruch 1.

Im laufenden Betrieb der Mehrachskinematik, beispielsweise während diese Bewegungsaufgaben ausführt, ist mindestens eine Sicherheitsfunktion aktiviert. Beispielsweise sind mehrere Sicherheitsfunktionen aktiv, beispielsweise eine sichere Zonenüberwachung, eine sichere Geschwindigkeitsüberwachung sowie die sichere Überwachung einer Orientierung. In der Regel werden beim Betrieb mit einer Sicherheitsfunktion mehrere Größen überwacht, beispielsweise die Positionen mehrerer bewegter Achsen und beispielsweise ferner jeweils Positionen und Geschwindigkeiten mehrerer bewegter Achsen.

Die Sicherheitsfunktion verwendet als Eingabedaten Positionen ihrer verschiedenen Achsen. Die Sicherheit beim Betrieb hängt somit neben der korrekten Funktionsweise der Sicherheitsfunktion auch von der Genauigkeit der Eingabedaten ab. Die jeweiligen Achspositionen werden der Sicherheitsfunktion mithilfe von jeweiligen Achssensoren oder Achsgebern bereitgestellt. Da die Sensoren oder Geber nur mit endlicher Genauigkeit arbeiten können, sind Positionen fehlerbehaftet. Ferner hängt die Sicherheit auch davon ab, dass axiale Nachlaufwege aufgrund von Trägheiten berücksichtigt werden. Es wird im Folgenden davon ausgegangen, dass Fehlerwerte der verschiedenen beteiligten Achsen bekannt sind.

Es handelt sich bei den Fehlerwerten um die für eine konkrete Applikation oder einen konkreten Aufbau oder eine konkrete Anlage mit Einsatz der Mehrachskinematik relevanten Fehlerwerte, welche Sensorauflösungen, Nachlaufwege etc. sind.

Ein Fehlerwert ist relevant, wenn er für die Anwendung einer Sicherheitsfunktion zu berücksichtigen ist, weil er sich beispielsweise auf die tatsächliche Position, Geschwindigkeit oder Orientierung, die überwacht wird, auswirkt.

Ein Fehlerwert liegt vor, wenn eine Abweichung zwischen tatsächlicher Position, Geschwindigkeit oder Orientierung der Segmente der Mehrachskinematik und von Sensoren gemeldeten Positionen, Geschwindigkeiten oder Orientierungen oder aufgrund von Steuerungsbefehlen vorgegebenen Sollpositionen, Sollgeschwindigkeiten oder Sollorientierungen besteht.

Die bekannten Fehlerwerte, insbesondere maximale Fehlerwerte, werden beispielsweise in einer Projektierungsphase der Mehrachskinematik im System, beispielsweise einem Steuerungssystem, hinterlegt. Im Betrieb kann die Sicherheitsfunktion auf die hinterlegten Fehlerwerte zurückgreifen.

Ebenso werden beispielsweise in einer Projektierungsphase die geometrischen Parameter der Mehrachskinematik hinterlegt.

Während des Betriebs der Mehrachskinematik fährt diese Trajektorien ab, die beispielsweise vorab bestimmt sind oder zur Laufzeit, beispielsweise abhängig von Kameradaten, festgelegt werden. Dabei nehmen die beteiligten Achsen jeweils nacheinander verschiedene Stellungen ein, die aufgrund der Trajektorie vorgegeben oder optimal sind. Aufgrund der verschiedenen Stellungen, die im Betrieb während des Durchlaufens einer oder mehrerer Trajektorien eingenommen werden, tragen die jeweiligen Fehlerwerte unterschiedlich oder in unterschiedlicher Kombination zu dem Kompensationswert bei. Aufgrund von Fehlerfortpflanzungs-Effekten ist je nach Stellung der Mehrachskinematik ein individueller Kompensationswert der von der Sicherheitsfunktion zur überwachenden Größe zu berücksichtigen.

Beispielsweise treten je Trajektorie je Achse im Verlauf der Bewegung entlang der Trajektorie unterschiedliche Abweichungen jeweiliger Positionen oder Geschwindigkeiten oder Orientierung der beteiligten Achsen aufgrund der Fehlerfortpflanzung auf. Beispielsweise treten je Trajektorie je Achse aufgrund von axialen Nachlaufwegen im Falle einer Sicherheitsreaktion, wie eines sicheren Halts, unterschiedliche Abweichungen zwischen tatsächlicher Position und Sollposition auf. Die axialen Nachlaufwege variieren darüberhinaus abhängig von einem Geschwindigkeitsprofil oder abhängig von Massen der Kinematik.

Für die Berechnung des Kompensationswertes wird insbesondere der jeweils aktuelle maximal zu erwartende Kompensationswert für eine Größe der Sicherheitsfunktion ermittelt. Dieser für die konkrete Kinematik und eine konkrete Position oder Stellung der Kinematik maximal mögliche Fehler wird fortwährend zur Laufzeit ermittelt und geht direkt in die Sicherheitsfunktion ein.

Die ermittelten Kompensationswerte sind beispielsweise je Achse oder je Segment zu berücksichtigende Fehlerwerte. Somit sind beispielsweise für den Betrieb maximale Längen, um die Überwachungszonen je Segment zu vergrößern sind, oder maximale Geschwindigkeitsbeträge, um vorgesehene kartesische Geschwindigkeitsschranken zu verringern sind, ermittelbar. Ferner werden mit den ermittelten Kompensationswerten beispielsweise statische Zonen, die für die gesamte Kinematik gelten, im Falle von Schutzzonen vergrößert oder im Falle von Arbeitszonen verkleinert.

Die ermittelten Kompensationswerte entsprechen maximal zu erwartenden Werten von zu überwachenden Größen, die die möglichen auftretenden Fehler kompensieren.

Beispielsweise werden bei der Ermittlung der Kompensationswerte auch numerische Fehler berücksichtigt, die beispielsweise durch approximative Algorithmen, iterative Verfahren, Rundungen beispielsweise bei Fließkomma- oder Festkommaarithmetik entstehen.

In einer Momentaufnahme der Mehrachskinematik im Betrieb ergibt sich ein Kompensationswert, der berücksichtigt wird, um eine Größe der Sicherheitsfunktion, beispielsweise eine Position, Geschwindigkeit oder Orientierung, so zu kompensieren, dass Ungenauigkeiten aufgrund maximal möglicher Abweichungen berücksichtigt werden. Gleichzeitig ist dieser nach dem vorgeschlagenen Verfahren berechnete Kompensationswert nicht unnötig, d. h. unnötig pessimistisch gewählt, da die konkrete Kinematik und die in einer Momentaufnahme konkrete Stellung der Kinematik bei der Berechnung des Kompensationswertes eingeht. Im laufenden Betrieb wird jeweils für zeitlich beliebig beabstandete Momentaufnahmen der aktuelle Kompensationswert berechnet. Beispielsweise erfolgt die Berechnung der Kompensationswerte mit dem Takt, in dem die Sensoren Werte zur Achspositionen bereitstellen. Somit erfolgt das Betreiben der Mehrachskinematik mit mindestens einer aktivierten Sicherheitsfunktion in Abhängigkeit von den berechneten Kompensationswerten.

Je nachdem, welche Massen, Trägheiten und Geschwindigkeiten an Achsen vorherrschen, können die Kompensationseffekte aufgrund von axialen Nachlaufwegen oder Sensorauflösungen überwiegen. Vorteilhafterweise werden beide Effekte ermittelt und die resultierenden maximalen Kompensationswerte letztlich berücksichtigt.

Auf vorteilhafte Weise wird somit während des Betriebs die Sicherheitsfunktion einerseits unter Berücksichtigung ausreichend großer Kompensationswerte betrieben, andererseits entfällt eine zu pessimistische Abschätzung, die sich unabhängig von den aktuellen Achswerten oder unabhängig von den geometrischen Parametern ergeben würde.

Erfindungsgemäß werden als Fehlerwerte jeweiliger Achsen Sensorauflösungen verwendet. Es handelt sich bei den Achssensoren beispielsweise um an den jeweiligen Achsen vorgesehene Geber. Bei den bereitgestellten Fehlerwerten handelt es sich beispielsweise um maximal je Achssensor mögliche Sensorfehler. Die Ermittlung des Kompensationswertes in Abhängigkeit von den Sensorauflösungen sowie den geometrischen Parametern der Mehrachskinematik und den sich aus Trajektorien der Mehrachskinematik ergebenden Achswerten der jeweiligen Achsen ermöglicht einen sicheren Betrieb der Mehrachskinematik, bei dem im laufenden Betrieb der Kinematik die Größen von Sicherheitsfunktionen, beispielsweise Sicherheits-Zonengrößen, unter Berücksichtigung des Kompensationswertes ausreichend groß bemessen werden und zugleich keine zu pessimistische Berücksichtigung von Sensorfehlern nötig macht.

Alternativ werden erfindungsgemäß als Fehlerwerte jeweiliger Achsen axiale Nachlaufwege verwendet. Die Nachlaufwege hängen insbesondere von der wirkenden Achsträgheit oder Achslast oder der Achsgeschwindigkeit ab. Beispielsweise sind die Nachlaufwege im Worst-Case bekannt und je Achse hinterlegt, beispielsweise in Tabellenform, und beispielsweise zusätzlich in Abhängigkeit von Achs-Eigenschaften hinterlegt. Insbesondere sind Achseigenschaften wie Trägheit und Geschwindigkeit zur Laufzeit bekannt und werden für die Berechnung oder das Aufrufen eines jeweiligen Fehlerwertes verwendet, so dass ein Kompensationswert Laufzeit-aktuell ermittelt wird. Beispielsweise führt die Vorgabe einer limitierten Geschwindigkeit zu einem kleineren Nachlaufweg der jeweiligen Achse. So erfolgt beispielsweise eine automatische oder dynamische Ermittlung und Anpassung des Kompensationswertes in Abhängigkeit von einem dynamisch veränderlichen Fehlerwert. Beispielsweise wird eine Größe einer Sicherheitsfunktion, beispielsweise eine Sicherheits-Zonengröße, angepasst, damit Sicherheitsreaktionen wie z.B. ein sicherer Stopp, auch unter Berücksichtigung der Nachlaufwege sicher ausgeführt werden. Somit werden vorteilhaft und insbesondere zusätzlich zur Berücksichtigung von Sensorauflösungen Unsicherheiten und Abweichungen von Sollwerten, die im Betrieb nach Einleiten einer Sicherheitsreaktion auftreten, im Betrieb berücksichtigt. Gemäß einer Ausgestaltung wird die Sicherheitsfunktion dynamisch angepasst, insbesondere durch Anpassen von Größen der Sicherheitsfunktion während der Laufzeit. Somit berücksichtigt die Sicherheitsfunktion dynamisch die jeweils aktuell gültigen und nötigen Kompensationswerte. Beispielsweise nimmt die Sicherheitsfunktion im Betrieb bei einer sicheren Zonenüberwachung einen Abgleich einer ermittelten Position, beispielsweise der Position einzelner Punkte einzelner Segmente der Mehrachskinematik, mit Zonen, die das Segment oder jeweilige Punkte des jeweiligen Segments nicht verlassen dürfen und erweitert dabei die Zonen um den aktuellen Kompensationswerte. Somit wird nur die minimal benötigte und zugleich maximal mögliche Kompensation vorgenommen. Ebenso wird beispielsweise eine zu überwachende Geschwindigkeit mit einem fortwährend um den jeweils aktuellen Kompensationswert verringerten Geschwindigkeitsgrenzwertbetrag abgeglichen.

Aus den Fehlerwerten sowie den geometrischen Parametern und den aktuellen Achswerten der Mehrachskinematik wird der Kompensationswert ermittelt, der dann je nach vorgesehener Sicherheitsfunktion für eine oder mehrere Größen der Sicherheitsfunktion von dieser berücksichtigt wird. Ist beispielsweise eine Zonenüberwachung vorgesehen, werden der Positionsfehler, der sich für die verschiedenen Segmente der Kinematik ergibt, und ein Orientierungsfehler beispielsweise des Endeffektors, ermittelt. Beide Fehlerwerte wirken als Kompensationswert für die Größen, die mit der Sicherheitsfunktion überwacht werden, in diesem Beispiel für die Abmessungen von Zonen. Diese Anpassung erfolgt vorzugsweise durch die Sicherheitsfunktion zur Laufzeit.

Beispielsweise wird die vorgenommene Anpassung durch die Sicherheitsfunktion dokumentiert. Ist eine Geschwindigkeitsüberwachung vorgesehen, wird für mehrere Überwachungspunkte anhand deren Positionsfehlern ein Geschwindigkeitsfehler berechnet und dieser wird beim Einrichten einer Grenzgeschwindigkeit beachtet. Ferner kann ein ermittelter Orientierungsfehler für eine Orientierungsüberwachung verwendet werden und einen Grenzwinkel um den entsprechenden Fehlerbetrag verkleinern.

Gemäß einer Ausgestaltung wird die Sicherheitsfunktion unter Verwendung eines zur Laufzeit stattfindenden Vergleichs mit in einer Projektierungsphase ermittelten Kompensationswerten betrieben und eine Sicherheitsreaktion eingeleitet, wenn die zur Laufzeit berechneten und die in der Projektierungsphase ermittelten Kompensationswerte jeweils festlegbare Abweichungsgrenzwerte unterschreiten.

Beispielsweise werden Kompensationswerte in einer Projektierungsphase geschätzt und in einem Sicherheitsfunktionsbaustein hinterlegt. Beispielsweise werden die Kompensationswerte abgeschätzt, indem maximale Fehlerwerte und geometrische Parameter der Mehrachskinematik bereits in der Projektierungsphase bekannt sind und spätere aktuelle Achswerte aufgrund von von der Mehrachskinematik einzunehmenden Achsstellungen abgeschätzt werden. Beispielsweise sind Trajektorien bekannt, aus welchen die im Betrieb einzunehmenden Achsstellungen abgeleitet werden.

Somit werden in der Projektierungsphase im späteren Betrieb zu erwartende aktuelle Kompensationswerte ermittelt. Die bei der Projektierung geschätzten Kompensationswerte werden statisch verwendet und zur Laufzeit mit den berechneten tatsächlich zu berücksichtigenden Kompensationswerten verglichen. Überschreiten die tatsächlich benötigten Werte die Schätzwerte, wird eine geeignete Sicherheitsreaktion ausgelöst, beispielsweise ein sicherer Stopp.

Vorteilhafterweise müssen die geschätzten Kompensationswerte nicht zwangsläufig den theoretisch schlechtesten Fall berücksichtigen. Es genügt, einen Wert anzugeben, der mit hoher Wahrscheinlichkeit nicht überschritten wird. Diese Schranke muss sicherheitstechnisch nicht begründet werden, da eine Überschreitung nicht zu einem gefährlichen Zustand führt.

Das Verfahren ist somit vorteilhaft auch anwendbar, wenn eine dynamische Anpassung von Größen der Sicherheitsfunktionen im Betrieb, beispielsweise von Grenzwerten, nicht möglich ist.

Gemäß einer Ausgestaltung werden die jeweiligen Fehlerwerte und/ oder die geometrischen Parameter in einer zeitlich vor der Laufzeit liegenden Projektierungsphase bereitgestellt. Vorteilhaft wird die Sicherheitsfunktionen somit in der Projektierungsphase eingerichtet. Ferner sind auch spätere Anpassungen möglich.

Gemäß einer Ausgestaltung werden die jeweiligen Fehlerwerte und/ oder die geometrischen Parameter zur Laufzeit bereitgestellt oder geändert. Vorteilhaft kann somit auf Änderungen in einem Aufbau, beispielsweise einem Hardwareaustausch, reagiert werden. Somit können neben Eingängen der Sicherheitsfunktion, wie insbesondere aktiven Zonen und Achswerten, zyklisch auch zur Laufzeit aktualisierte jeweilige Fehlerwerte und geometrische Parameter eingehen.

Gemäß einer Ausgestaltung ergeben sich die aktuellen Achswerte aus von der Mehrachskinematik abzufahrenden Trajektorien und während der Laufzeit für die durch die abzufahrenden Trajektorien zeitlich nacheinander eingenommenen Achsstellungen. Vorteilhafterweise werden nur die tatsächlich eingenommenen Achsstellungen für den Betrieb oder die Anpassung der Sicherheitsfunktionen verwendet. Insbesondere bei Aufbauten, bei welchen eine Trajektorie mittels unterschiedlicher Achsstellungen der Mehrachskinematik durchfahren werden kann, wird eine auf den konkreten Betrieb ausgelegte Sicherheitsüberwachung ermöglicht.

Gemäß einer Ausgestaltung werden die in einer Projektierungsphase ermittelten Kompensationswerte geschätzt oder während einer Probefahrt ermittelt. Vorteilhafterweise kann für Szenarien, in welchen die Sicherheitsfunktionen nicht dynamisch anpassbar ist, der laufende Betrieb bereits in einer Projektierungsphase nachgeahmt werden und es können die Kompensationswerte geschätzt oder mittels einer Probefahrt ermittelt werden.

Wird die Mehrachskinematik später im Einklang mit den in der Projektierungsphase angenommenen Trajektorien betrieben, kann die Sicherheitsfunktionen auf die ermittelten Werte aus der Projektierungsphase zurückgreifen. Überdies werden im Betrieb die tatsächlich benötigten Kompensationswerte berechnet und mit den geschätzten oder vorab ermittelten Kompensationswerte verglichen.

Erfindungsgemäß umfasst die Sicherheitsfunktion eine sichere Zonenüberwachung, eine sichere Orientierung und/ oder eine sichere kartesische Geschwindigkeit. Bei der sicheren Zonenüberwachung werden Zonen vorgegeben, die sich bewegende Abschnitte der Kinematik umgeben oder umhüllen. Aus den sicheren Achspositionen kann auf die Position und Orientierung dieser Zonen geschlossen werden.

Die ermittelten Zonen werden daraufhin überprüft, ob sie die für die Kinematik definierten Arbeitsraumzonen verlassen. Wird so ein Zustand festgestellt, wird eine Sicherheitsfunktion ausgelöst, was beispielsweise ein sicherer Stopp oder eine reduzierte Geschwindigkeit sein kann. Ebenso findet eine Kollisionsüberwachung mit in der Arbeitsumgebung der Kinematik definierten Schutzzonen statt und im Falle einer Überlappung der beiden Zonen, also der Kinematikzone mit der Schutzzone, wird eine Sicherheitsfunktion ausgelöst.

Vorteilhaft können somit mindestens benötigte axiale Nachlaufwege oder fehlerbehaftete Positionen aufgrund von begrenzten Sensorauflösungen berücksichtigt werden, um eine Sicherheitsreaktion rechtzeitig, einzuleiten, so dass ein sicherer Betrieb gewährleistet ist. Beispielsweise ist die Zonenüberwachung derart ausgebildet, und insbesondere die Zonengröße so dimensioniert, dass auch im Falle einer ausgelösten Sicherheitsreaktion, wie eines sicheren Halts, die Arbeitsraumzone nicht verlassen wird oder ein Überlappen mit einer Schutzzone verhindert wird.

Gemäß einer Ausgestaltung werden als Kompensationswerte mit der Laufzeit veränderliche und insbesondere jeweils aktuelle Winkelbeträge, Zonenabmessungsbeträge und/ oder Geschwindigkeitsbeträge ermittelt. Der Kompensationswert kann somit ermittelt werden, um eine zur Laufzeit stattfindende Kompensation für Größen vorzunehmen, die durch die Sicherheitsfunktion verwendet werden, um das Über- oder Unterschreiten bestimmter Grenzwerte unter Berücksichtigung der laufend veränderlichen und jeweils aktuellen Umstände zu überwachen. Beispielsweise werden Positionen von Achsen oder Winkeln oder Orientierungen von Achsen und somit beispielsweise von Werkzeugen oder anderen Teilen am Endeffektor, um den zugehörigen Kompensationswert ergänzt.

Der Kompensationswert ist vorteilhaft bereits der Wert, um den die Sicherheitsfunktion ohne weitere Berechnungen angepasst wird. Beispielsweise handelt es sich direkt um eine Länge, um die Überwachungszonen zu vergrößern sind. Beispielsweise handelt es sich um Winkel, die bei der Sicherheitsfunktion Sichere Orientierung zu berücksichtigen sind, um die Achsfehler sicher zu kompensieren.

Ferner handelt es sich beispielsweise um Geschwindigkeitsbeträge, um die nicht zu überschreitende Geschwindigkeitsgrenzwerte zu reduzieren sind. Bei Geschwindigkeitsgrenzwerten ist zu beachten, dass Geschwindigkeiten auf mindestens zwei Achspositionen basierend berechnet werden und der Grenzwert unter Berücksichtigung der Fehler und deren Fortpflanzung niedriger angesetzt werden muss.

Gemäß einer Ausgestaltung wird die Sicherheitsfunktion ferner in Abhängigkeit von einem zeitlichen Fehler bei der zeitlichen Abtastung jeweiliger Achssensoren betrieben. Somit kann ein Versatz bei der zeitlichen Abtastung berücksichtigt werden und damit weitere Ungenauigkeiten der Achssensoren neben Sensorauflösungen. Beispielsweise wird für jede Achse neben den maximalen Fehlern der Achssensoren, beispielsweise 1°, auch der maximale Fehler in der zeitlichen Abtastung, beispielsweise 1ms, angegeben. Aus dem Fehler in der zeitlichen Abtastung kann unter Verwendung der aktuellen Geschwindigkeit dieser Achse, beispielsweise 2°/ms, ein zusätzlicher Positionsfehler ermittelt werden. Dieser beträgt im gegebenen Beispiel 1ms*2°/ms=2°. Dieser kann auf den Sensorfehler addiert werden, um den gesamten Fehler in den Eingangswerten zu erhalten. Vorliegend ergibt sich gesamt ein Fehler von 1°+2°=3°.

Die Erfindung betrifft ferner eine Steuerungseinrichtung nach Anspruch 11.

Vorteilhaft ergeben sich unter Anwendung des vorstehend beschriebenen Verfahrens oder der vorstehend beschriebenen Steuerungseinrichtung für eine konkrete Thematik kleinstmögliche Kompensationswerte, die zugleich dennoch ausreichend sicher Fehler in den Eingangswerten, wie Sensorauflösungen und axiale Nachlaufwege, berücksichtigen. Somit kann in einem sicheren Betrieb mit der konkreten Kinematik näher an Zonen oder Geschwindigkeitsgrenzen herangefahren werden. Dies führt vorteilhafter Weise zu einer höheren Performance oder Verfügbarkeit der Kinematik. Unnötig pessimistische Abschätzungen von Fehlerwerten entfallen.

Die Erfindung wird nachfolgend anhand von Ausführungsbeispielen mit Hilfe der Figuren näher erläutert. Es zeigen:

Figur 1     eine schematische Darstellung einer Mehrachskinematik im Betrieb gemäß einem ersten Ausführungsbeispiel der Erfindung;

Figur 2     eine schematische Darstellung eines Steuerungseinrichtung mit Sicherheitsfunktionsblock gemäß einem zweiten Ausführungsbeispiel der Erfindung;

Figur 3     eine schematisches Ablaufdiagramm gemäß einem dritten Ausführungsbeispiel der Erfindung.

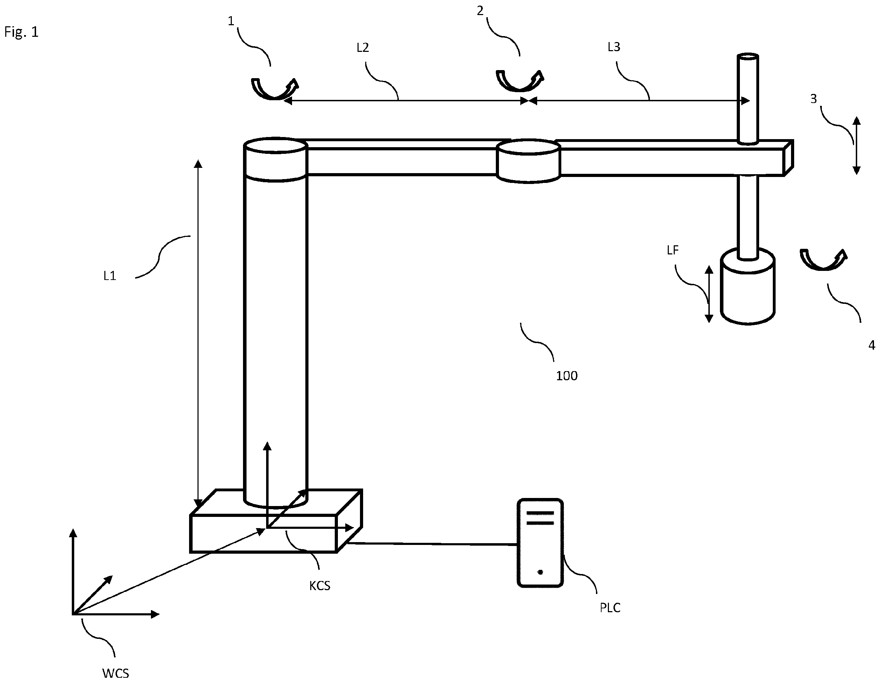

In Figur 1 ist schematisch eine Mehrachskinematik 100 abgebildet mit auf die Kinematik bezogenem Kinematik-Koordinatensystem KCS und einem Welt-Koordinatensystem WCS der Umgebung. Es ist eine erste Achse 1 als Drehachse vorgesehen, welche sich am Ende eines ersten Segments L1 befindet, das in seiner Ausrichtung mit einer vertikalen Achse des Kinematik-Koordinatensystems zusammenfällt.

Ein Nutzer gibt als geometrische Parameter der Mehrachskinematik 100 die Länge des ersten Segments L1, sowie ferner die Länge des zweiten Segments L2 und die Länge des dritten Segments L3 ein. Das zweite Segment L2 startet von der ersten Drehachse 1 aus und ist mit dem dritten Segment L3 über ein weiteres Drehgelenk verbunden, das die zweite Achse 2 bildet. Es ist zudem eine Hubachse 3 am dritten Segment vorgesehen, die vertikal verfahrbar ist. Schließlich ist noch eine letzte Achse 4 als drehbare Achse eingerichtet, die beispielsweise zugleich einen Flansch mit Abmessung LF bildet.

Zudem gibt der Nutzer folgende Geberfehler als maximale Fehlerwerte vor:

|  |  |
|---|---|
| - Geberfehler F1 Achse 1: | 1/10° |
| - Geberfehler F2 Achse 2: | 1/10° |
| - Geberfehler F4 Achse 4: | 1/10° |
| - Geberfehler F3 Achse 3: | 1mm |

Die Fehler in den Eingabewinkeln und den Eingabeparametern pflanzen sich wie folgt in die berechnete Position des Flansches fort und ergeben einen kartesischen Positionsfehler Fpos des Flansches:

$$Fpos = \mathbf{F}a1 + \mathbf{F}a2 + \mathbf{F}a3$$

Dabei sind $\mathbf{F}a1$, $\mathbf{F}a2$, $\mathbf{F}a3$ die Fehlerbeiträge der Achsen 1, 2, 3, die sich alle aufaddieren.

Für den Fehlerbeitrag Fa2 ist folgende Herleitung anzuwenden:
Gegeben sei ein Positionsvektor v, der um einen Windel $\alpha$ gedreht wird. Eine Winkelabweichung von $e_\alpha$ führt zu einem Positionsfehler $F = \|v - v'\|$ von maximal $2 * \sin\left(\frac{e_\alpha}{2}\right) * \|v\|$. Ist $\alpha$ in Grad gegeben, gilt $F < 2 * \sin\left(\frac{e_\alpha * 2\pi}{2 * 360}\right) * \|v\|$. Dies gilt, da die falsche Position $v'$ und die korrekte Position $v$ sowie der Mittelpunkt der Rotation ein gleichschenkliges Dreieck mit Spitzwinkel $e_\alpha$ bilden.

Somit ergibt sich vektoriell für $\mathbf{F}a2$ abhängig von den Achswerten a1 und a2:

$$Fa2 = 2 * \sin\left(\frac{F2 * \pi}{360}\right) * L3 * \begin{pmatrix} |\sin(a1 + a2)| \\ |\cos(a1 + a2)| \\ 0 \end{pmatrix}$$

Der Fehlerbeitrag **F**a1 ergibt sich analog zu:

$$Fa1 = 2 * \sin\left(\frac{F1 * \pi}{360}\right) * \left( L2 * \begin{pmatrix} |\sin(a1)| \\ |\cos(a1)| \\ 0 \end{pmatrix} + L3 * \begin{pmatrix} |\sin(a1 + a2)| \\ |\cos(a1 + a2)| \\ 0 \end{pmatrix} \right)$$

Dabei werden nach dem Superpositionsprinzip bei mehreren fehlerbehafteten Eingängen die Werte in den Ausgängen addiert.

Der Fehlerbeitrag Fa3 von (Linear-)Achse 3 fließt direkt in den z-Anteil des Gesamtpositionsfehlers ein:

$$Fa3 = \begin{pmatrix} 0 \\ 0 \\ F3 \end{pmatrix}$$

Zusätzlich kann eine betragsmäßige Abschätzung über alle möglichen Achseingangswerte hinweg erfolgen, sodass sich für das angegebene Beispiel ergibt:

$$||Fpos|| \le ||Fa1|| + ||Fa2|| + ||Fa3||$$

$$\le 2 * \sin\left(\frac{100 * \pi}{360000}\right) * (600mm) + 2 * \sin\left(\frac{100 * \pi}{360000}\right) * (300mm) + 1mm$$

$$= 2{,}570796mm$$

Da für die beispielhaft abgebildete Kinematik, beispielsweise ein Scara-Roboter, eine sichere Zonenüberwachung aktiv sein soll, werden die Radien bzw. Quaderhalblängen vorgesehener Kinematik-Schutz- oder Arbeitsräume um den Wert Fpos angepasst. Bei höheren Genauigkeitsanforderungen können die einzelnen Halblängen unter Berücksichtigung der relevanten Achsstellungen auch individuell angepasst werden.

Zusätzlich wird auch eine Sicherheitsfunktion eingerichtet, die die Orientierung des Flansches sicher überwacht.

Aus den Fehlerbeträgen F1, F2, F4 pflanzen sich Fehler in die berechnete Orientierung unverändert fort. Im Worst Case ergibt sich für die gegebenen Kinematikwerte somit der Fehler Frot:

$$Frot = \frac{100° + 100° + 100°}{1000} = \frac{300°}{1000}$$

Auch der Kompensationswert Frot wird von der Überwachungsfunktion verwendet, um eine Anpassung des Grenzwerts vorzunehmen. In diesem Fall wird das Kugelsegment, innerhalb dessen sich die Orientierung des Flansches befinden muss, damit keine Sicherheitsfunktion eingeleitet wird, zur Laufzeit entsprechend verkleinert.

Ist zusätzlich eine Geschwindigkeitsüberwachung als Sicherheitsfunktion aktiv, so ergibt sich die Geschwindigkeit eines Punktes analog aus dem Ergebnis der Vektorsubtraktion aus der zuletzt berechneten Position und einer aktuellen Position unter Berücksichtigung der verstrichenen Zeit. Die Fehler werden für den Worst-Case entsprechend additiv berücksichtigt, um die Grenzgeschwindigkeit entsprechend anzupassen.

Die beispielhaft ausgeführten drei Kompensationswerte werden jeweils im laufenden Betrieb durchgängig, d.h. laufend aktuell, ermittelt und die Sicherheitsfunktion in der Steuerung PLC entsprechend angepasst.

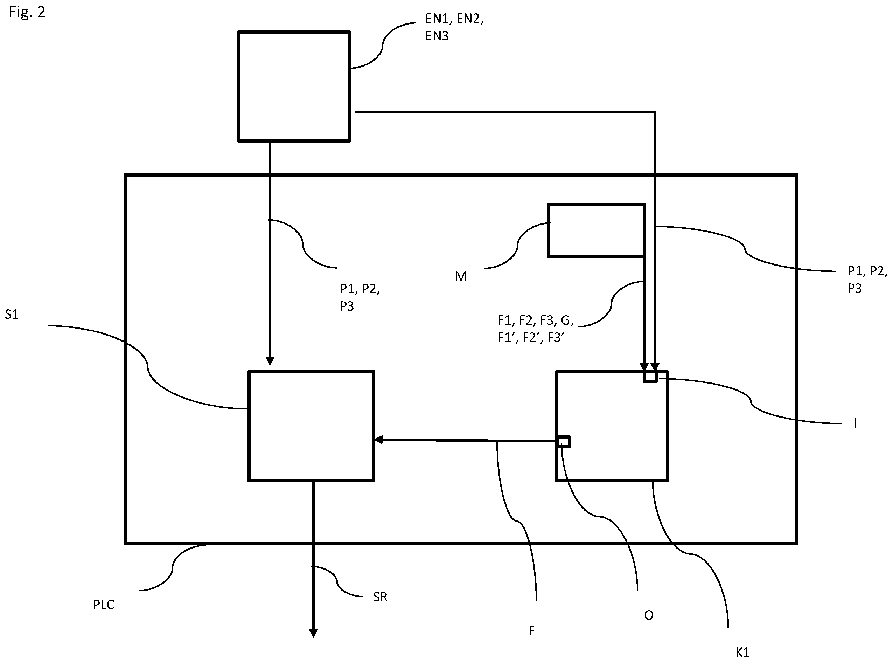

Figur 2 zeigt schematisch abgebildet eine Steuerungseinrichtung PLC mit einem Sicherheitsfunktionsblock S1 sowie einem Kompensationsblock K1 gemäß einem zweiten Ausführungsbeispiel der Erfindung. Der Sicherheitsfunktionsblock S1 ist für das Durchführen einer Sicherheitsfunktion zuständig und überwacht eine oder mehrere Größen wie in den Beispielen oben beschrieben. Der Sicherheitsfunktionsblock S1 ist vorteilhaft als Softwarebaustein ausgeführt. Der Sicherheitsfunktionsblock S1 ist für das Einleiten einer Sicherheitsreaktion SR zuständig, wenn eine Verletzung einer zu überwachenden Größe festgestellt wird, beispielsweise das Erreichen oder Überschreiten eines Grenzwertes.

Der Sicherheitsfunktionsblock S1 arbeitet basierend auf Positionswerten P1, P2, P3, die von Sensoren oder Gebern EN1, EN2, EN3 der beteiligten Achsen 1, 2, 3 bereitgestellt werden. Aus den Positionswerten P1, P2, P3 ermittelt die Sicherheitsfunktion die zu überwachende Größe oder zu überwachenden Größen wie beispielsweise kartesische Positionen oder Geschwindigkeiten.

Zusätzlich stellt der Kompensationsblock K1 mindestens einen Kompensationswert F bereit, der eine Größe der Sicherheitsfunktion beeinflusst, beispielsweise eine Vergleichsgröße einer zu überwachenden Größe. Der Kompensationswert F vergrößert oder verkleinert beispielsweise die Grenzwerte, bis zu denen die Sicherheitsfunktion keine Sicherheitsreaktion auslöst.

Der Kompensationsblock K1 erhält am Kompensationseingang I die Werte, die er zum Berechnen des Kompensationswertes F benötigt. Einerseits handelt es sich dabei um die Positionswerte P1, P2, P3, d. h. die aktuellen Achswerte im Betrieb. Diese werden ebenfalls von den Sensoren oder Gebern EN1, EN2, EN3 bereitgestellt. Andererseits erhält der Kompensationsblock K1 am Eingang I auch Werte aus einem Speicherbereich M, die für die konkrete Applikation hinterlegt wurden. Dabei handelt es sich um die geometrischen Parameter G der Mehrachskinematik 100 sowie die Fehlerwerte F1, F2, F3 der Sensoren EN1, EN2, EN3.

Zusätzlich werden Fehlerwerte F1' F2', F3' der Achsen 1, 2, 3, die aufgrund von axialen Nachlaufwegen bei Sicherheitsreaktionen zu berücksichtigen sind, aus dem Speicher M bereitgestellt. Die Berechnungen des Kompensationswertes F zur Laufzeit können dann nach einem der oben beschriebenen Beispiele erfolgen.

Werden beispielsweise im laufenden Betrieb Positionswerte gemeldet, die fehlerhaft sind, beispielsweise weil im Falle eines eingeleiteten Stopp-Vorganges Nachlaufwege einzelner Achsen kartesisch zu einer Verletzung von Sicherheitszonen führen könnten, oder weil Geberwerte aufgrund von begrenzter Auflösung fehlerbehaftet sind, so wird dennoch aufgrund der Anwendung der laufend berechneten Kompensationswerte für gesetzte Grenzwerte ein sicherer Betrieb ohne Kollisionen ermöglicht.

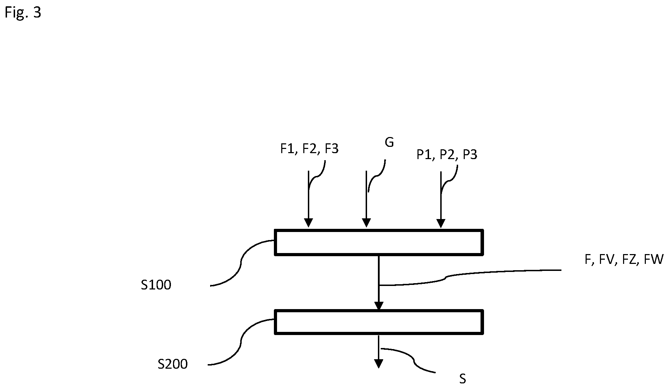

Figur 3 veranschaulicht mit einem Ablaufdiagramm ein Verfahren gemäß einem dritten Ausführungsbeispiel der Erfindung. Dabei erfolgt während des Betriebes einer Mehrachskinematik in einem ersten Schritt ein Berechnen S100 des Kompensationswertes F, an dessen Ende dieser ausgegeben wird. Anhand dieses Kompensationswertes F wird in einem zweiten Schritt ein sicheres Betreiben S200 der Mehrachskinematik ermöglicht. Während des Betriebs ist dabei mindestens eine Sicherheitsfunktion S im Betrieb. Beispielsweise ist die Funktion "Sichere Geschwindigkeitsüberwachung" aktiviert, welche für einzelne Achsen Höchstgeschwindigkeiten vorgibt und bei einem Überschreiten der Höchstgeschwindigkeit einen Sicherheitszustand einleitet. Beispielsweise wird das Überschreiten an einem Ausgang angezeigt oder ein Stoppen der Kinematik eingeleitet, ein sogenannter STO.

Dabei wird berücksichtigt, dass eine mithilfe von Sensoren oder Gebern festgestellte Geschwindigkeit einzelner Achsen oder eines Teils der Mehrachskinematik, dessen Geschwindigkeit sich aus dem Zusammenwirken mehrerer Achsen ergibt, fehlerbehaftet ist. Für die Geschwindigkeitsermittlung gehen zu vorgegebenen Zeitpunkt erfasste Positionen ein. Diese Positionen sind fehlerbehaftet und entsprechend ist auch die daraus abgeleitete Geschwindigkeit fehlerbehaftet.

Aus den Fehlern, die den beiden Positionsinformationen anhaften, erfolgt als ein Ermitteln des Kompensationswertes F, hier unter anderem eines Geschwindigkeitsfehlerbetrages FV der Geschwindigkeit nach den Methoden der Fehlerfortpflanzung. Dieser ist gerade so groß, dass der Worst Case sich addierender Fehler abgedeckt ist und zugleich keine zu pessimistische Abschätzung erfolgt.

Um wiederum die Positionsfehler richtig zu ermitteln, die dem Teil der Kinematik anhaften, der mit der Funktion "Sichere Geschwindigkeit" überwacht wird, beispielsweise der Endeffektor, werden die Positionsfehler aller beteiligten Achsen bzw. deren jeweiliger Achssensoren ermittelt und dann unter Anwendung von Fortpflanzungsalgorithmen ein Fehler der jeweiligen Position ermittelt. Dem Kompensationsprogramm, welches die Ermittlung des Kompensationswertes im Betrieb und zur Laufzeit vornimmt, werden dafür die maximalen Positionsfehler der beteiligten Achsen als maximale Fehlerwerte F1, F2, F3 aus einem Speicher bereitgestellt.

Neben dem Positionsfehler aufgrund des Ausgabewertes der Sensoren gehen auch Fehler bei der zeitlichen Abtastung der Sensoren ein. Je zu einem Zeitpunkt erfasster Position ergibt sich somit ein Gesamtpositionsfehlerbetrag FZ. Jeweilige Gesamtpositionsfehler werden entsprechend für die Ermittlung des Geschwindigkeitsfehlerbetrages FV berücksichtigt.

Der Gesamtpositionsfehlerbetrag FZ kann zudem für weitere aktivierte Sicherheitsfunktionen verwendet werden, beispielsweise um die Positionsfehler abzuschätzen, die für die Zonenüberwachung ausschlaggebend sind und Vergrößerungen der Sicherheitszonen nötig machen. Für eine zusätzliche aktivierte Sicherheitsfunktion "Sichere Orientierung" kann zusätzlich ein Winkelfehlerbetrag FW ausgegeben werden, der das Kugelsegment definiert, innerhalb dessen die Orientierung eines Werkzeuges oder anderen Teils der Kinematik im Worst Case zu erwarten ist.

Neben den maximalen Fehlern F1, F2, F3 werden auch die geometrischen Parameter G der Mehrachskinematik vom Kompensationsprogramm verarbeitet.

Aus den derart insgesamt zur Verfügung gestellten Angaben können die Kompensationswerte nun auf eine individuelle Kinematik und deren individuelle Bewegungsabläufe zugeschnitten zur Laufzeit bereitgestellt werden.

Insbesondere wird ein Kompensationswert für eine Größe als der Maximalfehlerbetrag ausgegeben, der sich zu einem Zeitpunkt im Betrieb der Mehrachskinematik ergibt.

**Patentansprüche**

1. Verfahren zum sicheren Betreiben einer Mehrachskinematik (100) unter Verwendung einer Sicherheitsfunktion, nämlich einer sicheren Zonenüberwachung, einer sicheren Geschwindigkeitsüberwachung oder einer sicheren Überwachung der Orientierung, wobei die Sicherheitsfunktion (S) auf jeweiligen Positionen von jeweiligen Achsen der Mehrachskinematik (100) basiert, aufweisend die folgenden Schritte:

   - Berechnen von Kompensationswerten (F) zur Laufzeit einer Steuerung der Mehrachskinematik (100), wobei die Kompensationswerte von der jeweiligen Überwachungsfunktion verwendet werden, um eine Anpassung eines Grenzwerts vorzunehmen, wobei das Berechnen in Abhängigkeit von vorgebbaren Fehlerwerten (F1, F2, F3) jeweiliger Achsen (1, 2, 3), nämlich Sensorauflösungen oder axialen Nachlaufwegen, von geometrischen Parametern (G) der Mehrachskinematik sowie von aktuellen Achswerten (P1, P2, P3) der Mehrachskinematik erfolgt;
   - Betreiben der Sicherheitsfunktion (S) in Abhängigkeit von den berechneten Kompensationswerten (F).

   **dadurch gekennzeichnet, dass**
   aufgrund verschiedener Stellungen, die im Betrieb der Mehrachskinematik während des Durchlaufens einer oder mehrerer Trajektorien eingenommen werden, die jeweiligen Fehlerwerte in unterschiedlicher Kombination zu dem Kompensationswert beitragen und aufgrund von Fehlerfortpflanzungseffekten je nach Stellung der Mehrachskinematik ein individueller Kompensationswert berücksichtigt wird.

2. Verfahren nach Anspruch 1, wobei die Sicherheitsfunktion (S) dynamisch angepasst wird, insbesondere durch Anpassen von Größen der Sicherheitsfunktion (S) während der Laufzeit.

3. Verfahren nach einem der vorstehenden Ansprüche, wobei die Sicherheitsfunktion (S) unter Verwendung eines zur Laufzeit stattfindenden Vergleichs mit in einer Projektierungsphase ermittelten Kompensationswerten betrieben wird und eine Sicherheitsreaktion eingeleitet wird, wenn die zur Laufzeit berechneten und die in der Projektierungsphase ermittelten Kompensationswerte jeweils festlegbare Abweichungsgrenzwerte unterschreiten.

4. Verfahren nach einem der vorstehenden Ansprüche, wobei die jeweiligen Fehlerwerte (F1, F2, F3) und/ oder die geometrischen Parameter (G) in einer zeitlich vor der Laufzeit liegenden Projektierungsphase bereitgestellt werden.

5. Verfahren nach einem der vorstehenden Ansprüche, wobei die jeweiligen Fehlerwerte (F1, F2, F3) und/ oder die geometrischen Parameter (G) zur Laufzeit bereitgestellt oder geändert werden.

6. Verfahren nach einem der vorstehenden Ansprüche, wobei sich die aktuellen Achswerte aus von der Mehrachskinematik abzufahrenden Trajektorien und während der Laufzeit für die durch die abzufahrenden Trajektorien zeitlich nacheinander eingenommenen Achsstellungen ergeben.

7. Verfahren nach einem der vorstehenden Ansprüche, wobei die in einer Projektierungsphase ermittelten Kompensationswerte geschätzt oder während einer Probefahrt ermittelt werden.

8. Verfahren nach einem der vorstehenden Ansprüche, wobei die Sicherheitsfunktion (S) eine sichere Zonenüberwachung, eine sichere Orientierung und/ oder eine sichere kartesische Geschwindigkeit umfasst.

9. Verfahren nach einem der vorstehenden Ansprüche, wobei als Kompensationswerte (F) mit der Laufzeit veränderliche Winkelbeträge (Frot), Zonenabmessungsbeträge (FZ) und/ oder Geschwindigkeitsbeträge (FV) ermittelt werden.

10. Verfahren nach einem der vorstehenden Ansprüche, wobei die Sicherheitsfunktion (S) ferner in Abhängigkeit von einem zeitlichen Fehler bei der zeitlichen Abtastung jeweiliger Achssensoren betrieben wird.

11. Steuerungseinrichtung (PLC) zum sicheren Betreiben einer Mehrachskinematik (100), aufweisend einen Sicherheitsfunktionsblock (S1), eingerichtet, in Abhängigkeit von jeweiligen Positionen von jeweiligen Achsen (1, 2, 3) der Mehrachskinematik (100) Sicherheitsreaktionen (SR) einer Sicherheitsfunktion (S), nämlich einer sicheren Zonenüberwachung, einer sicheren Geschwindigkeitsüberwachung oder einer sicheren Überwachung der Orientierung, einzuleiten, die Steuerungseinrichtung (PLC) umfassend:

- einen Kompensationsblock (K1) zum Berechnen von Kompensationswerten (F) zur Laufzeit einer Steuerung der Mehrachskinematik (100), wobei die jeweilige Überwachungsfunktion eingerichtet ist, die Kompensationswerte zu verwenden, um eine Anpassung eines Grenzwerts vorzunehmen,
- wobei der Kompensationsblock (K1) Eingänge (I) für Fehlerwerte (F1, F2, F3) jeweiliger Achsen (1, 2, 3), nämlich Sensorauflösungen oder axiale Nachlaufwege, für geometrische Parameter (G) der Mehrachskinematik (100) sowie für aktuelle Achswerte (EN) der Mehrachskinematik aufweist;
- wobei der Kompensationsblock (K1) Ausgänge (O) für Kompensationswerte (F) aufweist, wobei die Sicherheitsfunktion (S) eingerichtet ist, Sicherheitsreaktionen (SR) in Abhängigkeit von den ausgegebenen Kompensationswerten (F) einzuleiten,

**dadurch gekennzeichnet, dass**

die Steuerungseinrichtung (PLC) derart eingerichtet ist,
dass aufgrund verschiedener Stellungen, die im Betrieb der Mehrachskinematik während des Durchlaufens einer oder mehrerer Trajektorien eingenommen werden, die jeweiligen Fehlerwerte in unterschiedlicher Kombination zu dem Kompensationswert beitragen und aufgrund von Fehlerfortpflanzungseffekten je nach Stellung der Mehrachskinematik ein individueller Kompensationswert berücksichtigt wird.

## Claims

1.  Method for safely operating a multi-axis kinematic system (100) using a safety function, namely safe zone monitoring, safe speed monitoring or safe monitoring of orientation, the safety function (S) being based on respective positions of respective axes of the multi-axis kinematic system (100), comprising the following steps:

    - calculating compensation values (F) at the run time of a controller of the multi-axis kinematic system (100), the compensation values being used by the respective monitoring function to adapt a limit value, the calculation being performed on the basis of predefinable error values (F1, F2, F3) of respective axes (1, 2, 3), namely sensor resolutions or axial run-on distances, geometric parameters (G) of the multi-axis kinematic system and current axis values (P1, P2, P3) of the multi-axis kinematic system;
    - operating the safety function (S) on the basis of the calculated compensation values (F),

    **characterized in that**
    the respective error values contribute to the compensation value in different combinations on the basis of various attitudes adopted during operation of the multi-axis kinematic system while taking one or more trajectories, and allowance is made, depending on the attitude of the multiaxis kinematic system, for an individual compensation value on the basis of error propagation effects.

2.  Method according to Claim **1,** wherein the safety function (S) is dynamically adapted, in particular by adapting variables of the safety function (S) during the run time.

3.  Method according to either of the preceding claims, wherein the safety function (S) is operated by using a comparison, which takes place at the run time, with compensation values ascertained in a configuration phase, and a safety reaction is initiated if the compensation values calculated at the run time and the compensation values ascertained in the configuration phase are below respective stipulable deviation limit values.

4.  Method according to one of the preceding claims, wherein the respective error values (F1, F2, F3) and/or the geometric parameters (G) are provided in a configuration phase that is at a time before the run time.

5.  Method according to one of the preceding claims, wherein the respective error values (F1, F2, F3) and/or the geometric parameters (G) are provided or changed at the run time.

6.  Method according to one of the preceding claims, wherein the current axis values are obtained from trajectories that are to be travelled along by the multi-axis kinematic system, and during the run time for the axis attitudes that are adopted at successive times as a result of the trajectories that are to be travelled along.

7. Method according to one of the preceding claims, wherein the compensation values ascertained in a configuration phase are estimated or are ascertained during a test run.

8. Method according to one of the preceding claims, wherein the safety function (S) comprises safe zone monitoring, a safe orientation and/or a safe Cartesian speed.

9. Method according to one of the preceding claims, wherein angle absolute values (Frot), zone dimension absolute values (FZ) and/or speed absolute values (FV), which are variable with the run time, are ascertained as compensation values (F).

10. Method according to one of the preceding claims, wherein the safety function (S) is further operated on the basis of a timing error for the scanning of respective axis sensors over time.

11. Control device (PLC) for safely operating a multi-axis kinematic system (100), having a safety function block (S1), designed to initiate safety reactions (SR) of a safety function (S), namely safe zone monitoring, safe speed monitoring or safe monitoring of orientation, on the basis of respective positions of respective axes (1, 2, 3) of the multi-axis kinematic system (100), the control device (PLC) comprising:

   - a compensation block (K1) for calculating compensation values (F) at the run time of a controller of the multi-axis kinematic system (100), the respective monitoring function being designed to use the compensation values to adapt a limit value,
   - wherein the compensation block (K1) has inputs (I) for error values (F1, F2, F3) of respective axes (1, 2, 3), namely sensor resolutions or axial run-on distances, for geometric parameters (G) of the multi-axis kinematic system (100) and for current axis values (EN) of the multi-axis kinematic system;
   - wherein the compensation block (K1) has outputs (O) for compensation values (F), the safety function (S) being designed to initiate safety reactions (SR) on the basis of the output compensation values (F),

   **characterized in that**
   the control device (PLC) is designed in such a way that the respective error values contribute to the compensation value in different combinations on the basis of various attitudes adopted during operation of the multi-axis kinematic system while taking one or more trajectories, and allowance is made, depending on the attitude of the multiaxis kinematic system, for an individual compensation value on the basis of error propagation effects.

## Revendications

1. Procédé pour le fonctionnement sécurisé d'une cinématique à axes multiples (100) par utilisation d'une fonction de sécurité, à savoir d'une surveillance de zones sécurisée, d'une surveillance de vitesse sécurisée ou d'une surveillance sécurisée de l'orientation, dans lequel la fonction de sécurité (S) est basée sur des positions respectives d'axes respectifs de la cinématique à axes multiples (100), comprenant les étapes suivantes :

   - calcul de valeurs de compensation (F) au moment de l'exécution d'une commande de la cinématique à axes multiples (100), dans lequel les valeurs de compensation sont utilisées par la fonction de surveillance respective afin de procéder à une adaptation d'une valeur limite,
   dans lequel le calcul s'effectue en fonction de valeurs d'erreur pouvant être prédéfinies (F1, F2, F3) d'axes (1, 2, 3) respectifs, à savoir de résolutions de capteur ou de dépassements de course axiaux, de paramètres géométriques (G) de la cinématique à axes multiples ainsi que de valeurs d'axe actuelles (P1, P2, P3) de la cinématique à axes multiples ;
   - mise en fonctionnement de la fonction de sécurité (S) en fonction des valeurs de compensation (F) calculées,
   **caractérisé en ce que**,
   en raison de différents emplacements qui sont adoptés au cours du fonctionnement de la cinématique à axes multiples pendant le parcours d'une ou de plusieurs trajectoires, les valeurs d'erreur respectives contribuent à la valeur de compensation dans diverses combinaisons et, en raison d'effets de propagation d'erreurs, une valeur de compensation individuelle est prise en compte suivant l'emplacement de la cinématique à axes multiples.

2. Procédé selon la revendication 1, dans lequel la fonction de sécurité (S) est adaptée de manière dynamique, en particulier par adaptation de grandeurs de la fonction de sécurité (S) pendant la durée d'exécution.

3. Procédé selon l'une des revendications précédentes, dans lequel la fonction de sécurité (S) est mise en fonctionnement par utilisation d'une comparaison, ayant lieu au moment de l'exécution, à des valeurs de compensation déterminées dans une phase de conception, et une réaction de sécurité est lancée lorsque les valeurs de compensation calculées au moment de l'exécution et les valeurs de compensation déterminées dans la phase de conception descendent au-dessous de valeurs limites de déviation pouvant être respectivement fixées.

4. Procédé selon l'une des revendications précédentes, dans lequel les valeurs d'erreur (F1, F2, F3) respectives et/ou les paramètres géométriques (G) sont fournis dans une phase de conception se situant antérieurement au moment de l'exécution.

5. Procédé selon l'une des revendications précédentes, dans lequel les valeurs d'erreur (F1, F2, F3) respectives et/ou les paramètres géométriques (G) sont fournis ou modifiés au moment de l'exécution.

6. Procédé selon l'une des revendications précédentes, dans lequel les valeurs d'axe actuelles résultent de trajectoires à parcourir par la cinématique à axes multiples et pendant la durée d'exécution pour les emplacements d'axe adoptés successivement au fil des trajectoires à parcourir.

7. Procédé selon l'une des revendications précédentes, dans lequel les valeurs de compensation déterminées dans une phase de conception sont estimées ou sont déterminées pendant un trajet d'essai.

8. Procédé selon l'une des revendications précédentes, dans lequel la fonction de sécurité (S) comporte une surveillance de zones sécurisée, une orientation sécurisée et/ou une vitesse cartésienne sécurisée.

9. Procédé selon l'une des revendications précédentes, dans lequel des valeurs d'angle (Frot), des valeurs de dimension de zones (FZ) et/ou des valeurs de vitesse (FV) qui varient avec la durée d'exécution sont déterminées en tant que valeurs de compensation (F).

10. Procédé selon l'une des revendications précédentes, dans lequel la fonction de sécurité (S) est en outre mise en fonctionnement en fonction d'une erreur temporelle lors du balayage temporel de capteurs d'axe respectifs.

11. Dispositif de commande (PLC) pour le fonctionnement sécurisé d'une cinématique à axes multiples (100), comprenant un bloc de fonction de sécurité (S1), conçu pour lancer, en fonction de positions respectives d'axes (1, 2, 3) respectifs de la cinématique à axes multiples (100), des réactions de sécurité (SR) d'une fonction de sécurité (S), à savoir d'une surveillance de zones sécurisée, d'une surveillance de vitesse sécurisée ou d'une surveillance sécurisée de l'orientation, le dispositif de commande (PLC) comportant :

- un bloc de compensation (K1) pour le calcul de valeurs de compensation (F) au moment de l'exécution d'une commande de la cinématique à axes multiples (100), dans lequel la fonction de surveillance respective est conçue pour utiliser les valeurs de compensation afin de procéder à une adaptation d'une valeur limite,
- dans lequel le bloc de compensation (K1) comprend des entrées (I) pour des valeurs d'erreur (F1, F2, F3) d'axes (1, 2, 3) respectifs, à savoir des résolutions de capteur ou des dépassements de course axiaux, pour des paramètres géométriques (G) de la cinématique à axes multiples (100) ainsi que pour des valeurs d'axe actuelles (EN) de la cinématique à axes multiples ;
- dans lequel le bloc de compensation (K1) comprend des sorties (O) pour des valeurs de compensation (F), dans lequel la fonction de sécurité (S) est conçue pour lancer des réactions de sécurité (SR) en fonction des valeurs de compensation (F) émises en sortie,

**caractérisé en ce que**
le dispositif de commande (PLC) est conçu de telle sorte que, en raison de différents emplacements qui sont adoptés au cours du fonctionnement de la cinématique à axes multiples pendant le parcours d'une ou de plusieurs trajectoires, les valeurs d'erreur respectives contribuent à la valeur de compensation dans diverses combinaisons et, en raison d'effets de propagation d'erreurs, une valeur de compensation individuelle est prise en compte suivant l'emplacement de la cinématique à axes multiples.

Fig. 1

Fig. 2

Fig. 3

F1, F2, F3    G    P1, P2, P3

S100

F, FV, FZ, FW

S200

S

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190262993 A1